# EUROPEAN PATENT APPLICATION

(11) **EP 4 434 876 A1**
(43) Date of publication of application: **25.09.2024**
(21) Application number: 23163266.2
(22) Date of filing: 21.03.2023
(51) Int. Cl.: B64C 11/02, B64D 33/08, B64D 27/24, B64U 30/29, B64U 10/13, B64U 50/19

(54) **ELECTRICAL MACHINE, ELECTRICAL PROPULSION UNIT, VEHICLE FRAME STRUCTURE, VEHICLE**

(71) Applicant: Rolls-Royce Deutschland Ltd & Co KG, 15827 Blankenfelde-Mahlow (DE)
(72) Inventor: BARKER, Robert, 15827 Blankenfelde-Mahlow (DE); REEH, Andreas, 15827 Blankenfelde-Mahlow (DE); REINICKE, Gunar, 15827 Blankenfelde-Mahlow (DE)

(57) **Abstract**

The disclosure relates to an electrical machine (100) for integration into a vehicle frame structure (1000), wherein the vehicle frame structure (1000) comprises a structural wall (1100) which at least partially encloses an inner volume (1120), the electrical machine (100) comprising: a rotor (110) with a rotor shaft (120), wherein the rotor shaft (120) is rotatable around a rotational axis (AR), and connectable to a propulsor (302), in particular a propeller (304), for transferring torque to or from a fluid, a first bearing unit (140) configured to hold the rotor shaft (100) in a rotatable manner and a second bearing unit (160) configured to hold the rotor shaft (100) in a rotatable manner.

According to the disclosure, it is proposed that the first bearing unit (140) is releasably attachable to a first wall region (1012) of the structural wall (1100), and the second bearing unit (160) is releasably attachable to a second wall region (1014) of the structural wall (1100), wherein the first wall region (1012) and the second wall region (1014) are spaced apart with respect to the rotational axis (AR).

## Description

The present disclosure relates to electrical machines in general, and, more specifically, to the integration of electrical machines into a vehicle frame structure. With a growing degree of electrification in transportation systems, and in particular vehicles such as land, water and air vehicles, there exists an increased demand for electrical propulsion units.

When attaching an electrical machine of an electrical propulsion unit to a vehicle frame structure, in particular a frame that provides structural support for said vehicle, influential factors such as weight, installation space, ease of integration and maintainability, as well as a reliable operation are key parameters.

Further, with electrical propulsion units for vehicles being relatively compact propulsion units, it is now generally possible to arrange one or more electrical machines on a vehicle with a greater flexibility, in particular closer to a propulsor, and/or to provide a plurality of electrical machines and propulsors on a vehicle. A propulsor may be any device that interacts with the environment to transfer a torque generated by the electrical propulsion unit into a movement of the vehicle. The propeller may e. g. be a wheel, a propeller, a propelling screw and the like.

However, an electrical machine of an electrical propulsion unit needs to be reliably fixed to the vehicle frame, in particular to withstand the forces that arise during operation, e. g. when torque is generated for propelling the vehicle. Such fixing, mounting and/or housing means require a certain weight and installation space.

CN108750102 discloses an electric tail rotor drive for a helicopter. The electric tail rotor drive disclosed therein is arranged in a housing, wherein the housing is integrated into a tail beam of the helicopter.

Electrical machines for electrical propulsion units can still be improved, in particular with respect to reducing the weight and/or a required installation space of an electrical propulsion unit, while ensuring a reliable operation of said electrical propulsion unit.

It is therefore desirable to address at least one of the above drawbacks.

This is where the invention comes in, an object thereof being to improve electrical machines for integration into a vehicle frame structure with respect to an efficient and reliable operation.

In accordance with a first aspect of the present disclosure, an electrical machine is proposed for integration into a vehicle frame structure, wherein the vehicle frame structure comprises a structural wall which at least partially encloses an inner volume, the electrical machine comprising: a rotor with a rotor shaft, wherein the rotor shaft is rotatable around a rotational axis, and connectable to a propulsor, in particular propeller, for transferring torque to or from a fluid; a first bearing unit configured to hold the rotor shaft in a rotatable manner, and a second bearing unit configured to hold the rotor shaft in a rotatable manner.

According to the present disclosure, the first bearing unit is releasably attachable to a first wall region of the structural wall, and the second bearing unit is releasably attachable to a second wall region of the structural wall, wherein the first wall region and the second wall region are spaced apart with respect to the rotational axis.

The disclosure is based on the finding that, despite the high importance of a reliable operation, and in particular mounting, of an electrical machine to the vehicle frame structure, weight is a parameter for electrical machines in vehicles that influences efficiency, in particular fuel consumption, travel range, and/or flight or driving characteristics of the vehicle. Further, it is generally beneficial to keep a required installation space for an electrical machine small, so more space is available for passengers, payload, energy storage and/or other vehicle systems.

The present disclosure includes the finding, that the vehicle frame structure itself may have a sufficient degree of stiffness and stability to provide structural support for the electrical machine. In particular, the bearing units that hold the rotor shaft of the electrical machine in a rotatable manner, may be releasably attached, e. g. mounted, to the vehicle frame structure, thus decreasing a dependency from other structure-providing means, such as a housing. The electrical machine may be accommodated in an inner volume of the vehicle frame structure. The term "at least partially encloses an inner volume" in particular means that the structural wall is shaped such that it surrounds an inner volume, wherein "at least partially" means that this inner volume may be closed or open, e. g. the structural wall may completely surround the inner volume such as a container, or partially surround the inner volume, e. g. such as in a cup- or bell-shaped manner. The term "structural wall" refers to a structure-providing, in particular load-bearing, function of the wall. In particular, the structural wall is configured to bear loads occurring during the operation of the vehicle.

The present disclosure further includes the finding, that the vehicle frame structure itself may provide at least a partial protection from ambient conditions, such as foreign particles, moisture etc., to the electrical machine, in particular during the operation of the vehicle. By arranging the electrical machine in the inner volume, e. g. partially or fully protected by the structural wall, a dependency from other protection-providing means, such as a housing, may be decreased. By being releasably attachable, the bearing units can be mounted and dismounted from the structural wall and thus the vehicle frame with small effort, in particular without having to exchange or to destroy parts of the vehicle frame.

Further developments of the invention can be found in the dependent claims and show particularly advantageous possibilities to realize above-described concept in light of the object of the disclosure and regarding further advantages.

The vehicle frame structure may, in particular completely, provide the structural support for the bearing units. In other words: the electrical machine may not have a full enclosure such as a housing on its own, and may rather use the vehicle frame structure as a structure-providing housing. The first wall region and/or the first bearing unit may be arranged on a propulsor facing side of the structural wall. The second wall region and/or the second bearing unit may be arranged on a propulsor averted side of the structural wall. The first bearing unit may be arranged in a first region of the rotor shaft, and the second bearing unit may be arranged in a second region of the rotor shaft. The first bearing unit and the second bearing unit may be spaced apart with respect to the rotational axis.

In a further development, it is proposed that the rotor is connected in a torque transferring manner to the rotor shaft via a flexible coupling. The flexible coupling may be a plate made of, or comprising, a flexible and/or elastic material such as rubber. Alternatively or additionally, the flexible coupling may comprise structural elements, such as radially and/or circumferentially arranged orifices, to increase the flexibility of the flexible coupling. By means of a flexible coupling, the effect of lateral forces and other influences during operation on the rotor of the electrical machine may be reduced or eliminated, whilst transmitting torque from said rotor to the rotor shaft and/or the propulsor. In other words: a flexible coupling may be configured to substantially decouple mechanical loads between the electrical machine and the rotor shaft/propeller shaft, other than propelling torque provided electrical machine. In other developments, the rotor shaft may be connected in a torque transferring manner to the propulsor via a flexible coupling.

The first bearing unit may be or comprise a floating bearing, in particular a roller bearing. The roller bearing may comprise a plurality of cylindrical roller elements. The second bearing unit may be or comprise a fixed bearing, in particular a ball bearing. Via an arrangement of the first bearing unit comprising a floating bearing and the second bearing unit comprising a fixed bearing, an axial fixation of the rotor shaft may be achieved with the fixed bearing, while an axial expansion of the rotor shaft may be tolerated with the floating bearing. In other developments, e. g. depending on the application, the arrangement may be reversed, such that the first bearing unit may comprise a fixed bearing and the second bearing unit may comprise a floating bearing. A floating bearing may also comprise a ball bearing, wherein axial movability can be ensured e. g. via a corresponding fitting, in particular a clearance fit.

The first bearing unit may comprise a further fixed bearing, in particular alternatively to, or in addition to, the floating bearing. With such further fixed bearing, an additional axial alignment may be achieved at the first bearing unit.

In a development of the invention, the structural wall may be closed. This may imply that the structural wall completely enclosed the inner volume, with the exceptions of openings for components such as fluid inlets, fluid outlets and/or wall opening. In other developments of the inventions, the structural wall may comprise one or more, in particular a pattern of, orifices. A structural wall with one or more orifices may be beneficial for saving weight, and/or allowing an ambient air flow to pass the electrical machine for cooling purposes.

In a further development, a cooling system for guiding a cooling fluid flow is proposed, wherein the cooling system comprises at least one fluid inlet and at least one fluid outlet, and the at least one fluid inlet and the at least one fluid outlet are arranged in or on the structural wall.

The cooling system may comprise a particle separator and/or a filter, arranged at the at least one fluid inlet. In particular, the particle separator adapted to extract particles out of the cooling fluid flow. In particular, the filter is adapted to filter solid and/or liquid and/or gaseous elements out of the cooling fluid flow. Alternatively, the at least one fluid inlet and/or the at least one fluid outlet may be arranged in an adapter plate. The cooling system may comprise one or more conduits for guiding the cooling fluid flow, in particular from the at least one fluid inlet to the stator module and/or the rotor.

The at least one fluid outlet may be a suction outlet, configured to propel the cooling fluid flow, in particular by means of an ambient fluid flow flowing relative to the electrical machine and/or the vehicle frame structure. The at least one fluid inlet and/or the suction outlet may be arranged at or near a radial outer region of the propulsor.

The suction outlet may be arranged on a location with a relative underpressure, e. g. in proximity of a passing fluid stream propelled by the propulsor and/or of an ambient air flow. By means of a suction outlet, a cooling fluid flow may be propelled, in particular as the only fluid propelling mechanism, or in addition to other fluid propelling mechanisms such as compression at the fluid inlet and/or fluid propelling via blades rotating with the rotor of the electrical machine.

In a further development, at least one adapter plate is proposed. In particular, it is proposed that at least one of the first bearing unit and the second bearing unit is releasably attachable to the structural wall by means of an adapter plate, and the at least one bearing unit is fixed to the adapter plate. The adapter plate may be configured for receiving, in particular mounting, at least one bearing unit. The mounting of the at least one bearing unit to the adapter plate may be releasable or permanent. The adapter plate may be configured to be releasably attached to the vehicle frame structure. By means of an adapter plate, easy repair and/or replacement of the electrical machine or single components thereof can be achieved. Further, an improved mechanical connection between the bearing units and the airframe can be achieved, in particular through a better load transmission and/or distribution of forces. A bearing unit may be a bearing, or plurality, in particular an assembly, of bearings. The adapter plate may comprise a circlip or retaining ring for axially fixing the bearing unit to the adapter plate. In developments of the invention, the bearing unit may be at least partially integrated into the adapter plate. In developments, the adapter plate itself may be part of the bearing unit, e. g. such that a bearing race is machined into the adapter plate, such that an outer bearing shell of the bearing unit may be omitted.

The adapter plate may be, or comprise, a bushing. The bushing may be adapted to accommodate rolling elements of the bearing unit, e. g. the bushing itself may serve as a bearing shell. In other words: The bushing may comprise an outer bearing race. The adapter plate may be configured to be at least partially insertable into the structural wall, in particular such that the adapter plate is arranged in a flush manner with respect to the structural wall. "Flush" in particular means that the structural wall and the adapter plate are joined together such that they together create a substantially continuous outer surface (e. g. without steps). Via such flush arrangement, the fluid dynamic, in particular aerodynamic, properties of the vehicle frame can be improved. By means of such adapter plates arranged in a flush manner, the degree of integration of the electrical machine into the vehicle frame structure may be increased, in particular the electrical machine may be fully integrated into the vehicle frame structure. The adapter plate may be made of, or comprise, a metal such as titanium and/or steel. The adapter plate may be made of, or comprise, another suitable material, e. g. a composite material such as a fibre-reinforced composite material. The first bearing unit may be arranged on a first adapter plate, and/or the second bearing unit may be arranged on a second adapter plate.

In a further development, the adapter plate may be configured to cover a, in particular circular, wall opening with an opening radius. Accordingly, the adapter plate may also be of circular shape. Any other shape, such as in rectangular or polygonal shape, of the adapter plate and/or the wall opening may also be possible within the scope of this disclosure. The opening radius may be larger than an outer machine radius of the electrical machine. With such opening radius, a better exchangeability of the electrical machine through the wall opening can be achieved, improving the maintainability/exchangeability of the electrical machine.

In a further development, the adapter plate may comprise a shoulder, configured to fit to a wall shoulder of the structural wall. The adapter plate may comprise a flange, in particular forming said shoulder. The shoulder and/or the wall shoulder may extend, at least partially, perpendicular to the rotational axis, e. g. protruding in a radial direction. With a flange a mechanical connection can be established that is stable and easy to align.

In a further development, a stator module is proposed, wherein the stator module is attachable to the structural wall or to the adapter plate. By attaching the stator module to the structural wall or to the adapter plate, a further main component of the electrical machine, in addition to the bearing units, may be arranged on the vehicle frame, further reducing the dependence from additional structural or housing elements. The stator module may be electrically connected to a power converter, e. g. by means of cables and/or busbars. In developments where the stator module is attached or attachable to the adapter plate, a replacement of the stator module, e. g. for maintenance or repair purposes, can be further facilitated. In developments, the stator module may be attached to exactly one structural wall or to exactly one adapter plate. In particular when the rotor of the electrical machine is an out-runner type rotor, attaching the stator module on only one side may be particularly suitable, as the rotor, which then is of an out-runner type, and/or the flexible coupling, may be configured to partially or completely enclose the other side of the stator module, i. e. the side axially opposing the adapter plate or structural wall the stator module is mounted to.

In a further development, a cartridge is proposed, wherein the cartridge contains the rotor and/or the stator module and/or at least one of the first and second bearing units. The cartridge may be attachable to the structural wall and/or to the adapter plate. In particular, the cartridge may be configured to contain components of the electrical machine, or the complete electrical machine, therein, in particular at least one of: the bearing units, the rotor shaft, the rotor, and the stator module. By means of a cartridge, the transport, mounting and/or exchange of an electrical machine can be facilitated. With such cartridge, the electrical machine may gain a more modular character. In some developments, the cartridge may be of a lightweight material and/or have a relatively low stiffness, such that a mounting of the bearing units and/or the adapter plates is recommended, or even necessary, prior to an operation of the electrical machine. The one or more adapter plates and the cartridge may be configured to be releasably joined to each other.

The cartridge may have an outer cartridge radius, wherein the outer cartridge radius is smaller than the opening radius of the wall opening. With such outer cartridge radius, the replaceability of the electrical machine can be further improved, enabling the insertion and extraction of the electrical machine within the cartridge as a whole.

The cartridge may comprise one or more cartridge orifices, in particular distributed in a pattern across its circumference. The cartridge orifices may be in size and number such that a greater percentage of the (theoretically closed) cartridge surface is occupied by orifices than by the cartridge itself. The cartridge may be a framework cartridge, comprising a plurality of longitudinal body elements that are joined together. A framework cartridge may be a cage-like cartridge. The plurality of longitudinal body elements may be welded or cast, such as die cast, together, or joined together releasably e. g. by means of screws, bolts or fasteners. Also combinations of different joining techniques are possible. The framework cartridge may be a tubular structure. The longitudinal body elements may be tubes. The framework cartridge and/or the tubular structure and/or the tubes may be made of a metal material (e. g. aluminum, steel, titanium), or of a plastic material, or of a composite material (e.g. fibre reinforced composite), or of a combination thereof. With such framework cartridge and/or a cartridge with cartridge orifices, weight may be saved, whilst providing further mechanical stability. Due to the integration of the electrical machine into the vehicle frame, the vehicle frame already provides a certain degree of protection to the electrical machine, allowing for said orifices and/or the framework cartridge.

In a further development, a machine fairing is proposed, wherein the machine fairing at least partially surrounds the electrical machine and/or the cartridge. The machine fairing may be configured to mate with the structural wall so as to form a substantially continuous surface in an interface region between the structural wall and the machine fairing. The machine fairing may be permanently or releasably fixed to at least one of the adapter plates.

The electrical machine may be a transversal flux machine, or a radial flux machine, or an axial flux machine. The rotor may be an out-runner rotor, or an in-runner rotor. The rotor may be of a double rotor type, with a first rotor part and a second rotor part, with a stator arranged in between said first and second rotor part.

In accordance with a second aspect of the present disclosure, an electrical propulsion unit is proposed comprising an electrical machine according to the first aspect of the disclosure. The electrical propulsion unit may be an electrical propulsion unit for an aircraft, in particular a lift electrical propulsion unit.

In a further development of the electrical propulsion unit, a power converter is proposed, wherein the power converter is electrically connected to an energy supply via at least one supply cable and/or wherein the power converter is mounted to the structural wall. The power converter and/or the supply cable may be arranged such that it is at least partially exposed to the cooling fluid flow.

In accordance with a third aspect of the present disclosure, a vehicle frame structure is proposed, comprising an electrical machine according to the first aspect of the disclosure and/or an electrical propulsion unit according to the second aspect of the disclosure. In particular, the vehicle frame structure may be an airframe, or a part of an airframe for an aircraft. For example, the vehicle frame structure may be a, or comprise a, rotor boom of an aircraft, in particular of an electrical vertical takeoff and landing (eVTOL) aircraft. The vehicle frame structure and/or the structural wall may be made of, or comprise, a metal such as aluminium, or a fibre reinforced composite.

In a further development of the vehicle frame structure, it is proposed that the structural wall may form a closed cross section in at least one plane, wherein the rotational axis lies within the plane. By means of such closed cross section, an improved stability of the vehicle frame structure can be achieved. Such closed cross section may be achieved by a hollow profile, such as a boom, or any other tubular structural element. In other developments, the plane may be parallel to the rotational axis (i. e. the plane and the rotational axis do not intersect). The first and second wall region may be arranged substantially parallel to each other.

In a further development of the vehicle frame structure, it is proposed that the vehicle frame structure is a, or comprises a, rotor boom.

Optionally, the vehicle frame structure is at least partially surrounded by a fairing. The fairing may be a boom fairing. The fairing and/or the machine fairing may be made of, or comprise, a fibre reinforced composite or aluminium. The fairing and/or machine fairing may be aerodynamically shaped.

In a further development of the vehicle frame structure, it is proposed that the structural wall comprises at least one wall opening, configured to accommodate an adapter plate and/or a cartridge. The wall opening may be arranged at the first wall region of the structural wall, or the second wall region of the structural wall, or at a third wall region, such as a lateral wall region of the structural wall. The wall opening may comprise a wall shoulder. The wall shoulder may be configured to mate with a shoulder of a corresponding adapter plate. The wall opening may have an opening diameter that is equal to or greater than an outer cartridge diameter of a cartridge, or an outer machine diameter of the electrical machine.

In a further development of the vehicle frame structure, a fork structure is proposed, configured to receive the electrical machine, in particular at least one of the adapter plates. The fork structure may be formed by the structural wall, or may be attached to the structural wall. The fork structure may comprise a fork shoulder, adapted to mate with the shoulder of a corresponding adapter plate. The fork structure may comprise through holes or threaded holes, configured to receive bolts, fasteners or screws for fixing a bearing unit or an adapter plate. The fork structure may be at least partially surrounded by a fairing, in particular by a boom fairing. The fairing surrounding the fork structure may be configured to mate in a flush manner with a machine fairing of the electrical machine. By such arrangement, a smooth interface region between said fairing and the machine fairing can be achieved, resulting in advantageous fluid dynamic properties. A fork structure is particularly suitable for a stable, yet easy mounting of an electrical machine. In particular, the fork structure may be adapted to receive the electrical machine in an insertion movement. The insertion movement may be parallel to a boom axis.

In a further development of the vehicle frame structure, a support structure is proposed. The support structure may be, or comprise, a beam belt. A beam belt is a stiffening element, which in particular may be of longitudinal shape and/or may be arranged on the inside, i.e. in the inner volume, of the vehicle frame structure. Alternatively or additionally, the support structure may comprise other structural elements such as one or more tubes, that extend from the first region of the structural wall to the second region of the structural wall. By means of such support structure, in particular beam belt or tube, the stiffness and/or stability of the vehicle frame structure can be improved, in particular in the area of the bearing units.

At least one wall opening may be arranged on, or adjacent to, a beam belt. The first bearing unit and/or the second bearing unit may be arranged on, or adjacent to, a beam belt. At least one adapter plate may be arranged on, or adjacent to, a beam belt. Via such arrangement on, or next to, a beam belt, forces acting on the bearing units of the electrical machines are transmitted into the vehicle frame structure at a relatively stiff location.

In a further development of the vehicle frame structure, a wall surface layer may be arranged on the structural wall. A wall surface layer may be arranged on the inside, e. g. on the side of the inner volume, and/or on the outside of the structural wall. The wall surface layer may comprise one or more of: a containment layer, a noise shield layer, and an electromagnetic interference (EMI) shield layer. The containment layer may be made of or comprise a material suitable to absorb and/or reduce the impact of objects, such as an aramide ply or a metal. The noise shield layer may be configured to dampen and/or absorb the sound emitted by the electrical propulsion unit. The EMI shield layer may be configured to reduce electromagnetic interference and thus may by beneficial for avoiding compatibility issues with other electronic aircraft systems.

In accordance with a fourth aspect of the present disclosure, a vehicle, in particular aircraft, is proposed, comprising a vehicle frame structure according to the third aspect of the disclosure. The electrical propulsion unit may be attached to or integrated into a rotor boom. The rotor boom may be fixed, such that a relative position with respect to the airframe is constant. In other developments, the rotor boom, or a part of it, may be movable, in particular tiltable, such that a relative position of the electrical propulsion unit with respect to the airframe is alterable. The electrical machine and/or the electrical propulsion unit may be attached to an airframe such that the rotational axis of the electrical machine is substantially vertical, in particular deviating less than 5° from a vertical axis of the aircraft.

It shall be understood that the electrical machine according to the first aspect of the disclosure, the electrical propulsion unit wanting to the second aspect of the disclosure, the vehicle frame structure according to the third aspect of the disclosure, and the vehicle according to the fourth aspect of the disclosure may comprise identical or similar developments, in particular as described in the dependent claims. Therefore, a development of one aspect of the disclosure is also applicable to another aspect of the disclosure.

These and other aspects of the invention will be apparent from and elucidated with reference to the embodiments described hereinafter. The embodiments of the invention are described in the following on the basis of the drawings. The latter is not necessarily intended to represent the embodiments to scale. Drawings are, where useful for explanation, shown in schematized and/or slightly distorted form. With regard to additions to the teachings immediately recognizable from the drawings, reference is made to the relevant state-of-the-art. It should be borne in mind that numerous modifications and changes can be made to the form and detail of an embodiment without deviating from the general idea of the disclosure. The features of the disclosure in the description, in the drawings and in the claims may be essential for a further development of the invention either individually or in any combination.

In addition, all combinations of at least two of the features disclosed in the description, drawings and/or claims fall within the scope of the disclosure. The general idea of the disclosure is not limited to the exact form or detail of the preferred embodiment shown and described below, or to an object which would be limited in comparison to the object claimed in the claims. For specified design ranges, values within the specified limits are also disclosed as limit values and thus arbitrarily applicable and claimable.

Further advantages, features and details of the invention result from the following description of the preferred embodiments as well as from the drawings, which show in:
- Fig. 1: a first embodiment of an electrical propulsion unit with an electrical machine according to the disclosure in a front view cross sectional illustration;
- Fig. 2: a side view cross sectional illustration of the first embodiment;
- Fig. 3: a top view illustration of the first embodiment;
- Fig. 4: a second embodiment of an electrical propulsion unit according to the disclosure in a side view cross sectional illustration;
- Fig. 5: a third embodiment of an electrical propulsion unit according to the disclosure in a side view cross sectional illustration;
- Fig. 6: a fourth embodiment of an electrical propulsion unit according to the disclosure in a side view cross sectional illustration;
- Fig. 7: a fifth embodiment of an electrical propulsion unit according to the disclosure in a front view cross sectional illustration;
- Fig. 8: a side view cross sectional illustration of the fifth embodiment;
- Fig. 9: a top view illustration of the fifth embodiment;
- Fig. 10: a first example of an adapter plate and a structural wall in a schematic, cross sectional illustration,
- Fig. 11: a second example of an adapter plate and a structural wall in a schematic, cross sectional illustration,
- Fig. 12: a third example of an adapter plate and a structural wall in a schematic, cross sectional illustration,
- Fig. 13: a sixth embodiment of an electrical propulsion unit according to the disclosure in a front view cross sectional illustration;
- Fig. 14: a seventh embodiment of an electrical propulsion unit according to the disclosure in a front view cross sectional illustration;
- Fig. 15: a eighth embodiment of an electrical propulsion unit according to the disclosure in a front view cross sectional illustration;
- Fig. 16: an ninth embodiment of an electrical propulsion unit according to the disclosure in a front view cross sectional illustration;
- Fig. 17A: an tenth embodiment of an electrical propulsion unit according to the disclosure in a top view illustration in a first mounting state;
- Fig. 17B: the tenth embodiment in a second mounting state;
- Fig. 18: an eleventh embodiment of an electrical propulsion unit according to the disclosure in a top view illustration;
- Fig. 19: A schematic illustration of a vehicle in form of an aircraft with electrical propulsions units according to the disclosure.

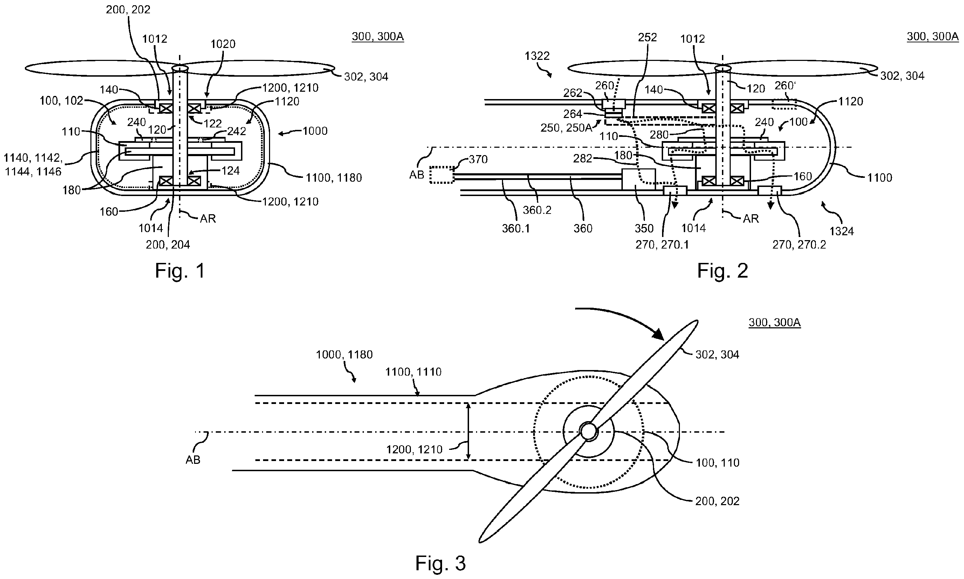

Fig. 1 shows a first embodiment 300A of an electrical propulsion unit 300 according to the disclosure. The electrical propulsion unit 300 includes an electrical machine 100, configured as a transversal flux machine 102. Any other type of electrical machine, such as a radial flux machine or axial flux machine, may alternatively be applied within the scope of this disclosure.

In the embodiment shown, the electrical machine 100 is integrated into a vehicle frame structure 1000 in the form of an airframe 1010 of an aircraft 1002 (not shown here). The airframe 1010 comprises a rotor boom 1180, the cross-section of which is visible in Fig. 1. The rotor boom 1180 surface to hold the electrical propulsion unit 300, including its propulsor 302, in a fixed position with respect to the airframe 1010. The aircraft 1002, and the airframe 1010 respectively, comprises a plurality of e. g. eight, propulsors 302, which are arranged on a plurality of rotor booms 1180 (not shown in Fig. 1).

The electrical machine 100 comprises a stator module 180 with windings (not shown here). The electrical machine 100 comprises a rotor 110, which in the case shown here is configured as an out-runner rotor, arranged on a radial outer side of the stator module 180. Any other type of arrangement of the rotor with respect to the stator, such as an in-runner rotor arrangement, may alternatively be applied within the scope of this disclosure.

The rotor 110 is fixed to a rotor shaft 120 via a flexible coupling 240. Due to a fixed connection between the rotor 110 and rotor shaft 120, here via the flexible coupling 240, the rotor 110 and the rotor shaft 120 rotate together around a rotational axis AR. The electrical machine 100 comprises a first bearing unit 140 which is attached to a structural wall 1100 in a first wall region 1012 of the structural wall 1100, and a second bearing unit 160, which is attached to the structural wall 1100 in a second wall region 1014 of the structural wall 1100. The rotational axis AR lies within the drawing plane of Fig. 1.

The first wall region 1012 and the second wall region 1014 are arranged substantially parallel to each other and on opposing sides of the rotor boom 1180. The first wall region 1012 is located on a propulsor facing side 1322 of the structural wall 1100. The second wall region 1014 is located on a propulsor averted side 1324 of the structural wall 1100. As visible in Fig. 1, the rotor boom 1180 comprises a closed cross section, with the structural wall 1100 enclosing an inner volume 1120.

The rotor shaft 120 is connected to a propulsor 302, in the form of a propeller 304, configured to transfer torque to surrounding air, in particular to generate thrust to propel and/or lift the aircraft 1002. For this purpose, the rotor shaft 120 extends out of the structural wall 1100 of the rotor boom 1180 at the first wall region 1012.

The first and second bearing units 140, 160 are fixed to the structural wall 1100 via adapter plates 200. The first bearing unit 140, arranged on the first wall region 1012 facing the propulsor 302, is fixed to the structural wall 1100 via a first adapter plate 202. The second bearing unit 160, arranged on the second wall region 1014, is fixed to the structural wall 1100 via a second adapter plate 204.

The first adapter plate 202 is configured as an open adapter plate comprising a through hole, through which the rotor shaft 120 extends from the inner volume 1120 to the outside. The second adapter plate 204 is a closed adapter plate, at which the rotor shaft 120 terminates.

Optionally, as indicated in Fig. 1, the vehicle frame structure 1000 may comprise a wall surface layer 1140, arranged on the structural wall 1100. The wall surface layer 1140 may comprise a containment layer 1142, and/or a noise shield layer 1144, and/or an EMI shield layer 1146.

The adapter plates 200 establish a mechanical connection between the structural wall 1100 and the corresponding bearing unit 140, 160. An adapter plate 200 allows for better replaceability of the bearing units 140, 160 and thus for better maintenance and repair of the electrical machine 100. The adapter plates 200 further improve the distribution of forces from the bearing units 140, 160 into the structural wall 1100, and thus the vehicle frame structure 1000.

Wherein the illustration of Fig. 1 shows a cross-sectional view of the electrical propulsion unit 300A in a plane perpendicular to a boom axis AB of the rotor boom 1180, the illustration of Fig. 2 is a cross-sectional view parallel to said boom axis AB.

Optionally, the electrical propulsion unit 300 may comprise a cooling system 250, as shown here. In Fig. 2, a cooling system 250 is schematically illustrated, which is configured to cool the electrical propulsion unit 300, in particular the electrical machine 100. The cooling system 250 is adapted to form and/or guide a cooling fluid flow 280 to the rotor 110 and/or the stator module 180, in order to extract heat out of these components and accordingly cool them. Optionally, the cooling system 250 may comprise one or more cooling fluid conduits 252 for guiding said cooling fluid flow 280, one of which is exemplary shown in Fig. 2. In other embodiments, such cooling fluid conduits 252 may not be necessary, as the inner volume 1120 of the vehicle frame structure 1000 provides sufficient guiding. In the embodiment shown, the cooling fluid flow 280 is a cooling air flow. The cooling system 250 includes a fluid inlet 260 which is arranged on the propulsor facing side 1322 of the structural wall 1100. Further, the fluid inlet 260 is arranged in a radially outer region of the propulsor 302, allowing to draw in air that has been accelerated by the propulsor 302 to a relatively high speed and/or pressure. By such arrangement, a relatively high mass flow of the cooling fluid flow 280, and thus a required cooling performance, can be achieved. Alternatively or additionally, the fluid inlet 260 can be arranged in a different part of the structural wall 1100, in particular on the propulsor facing side 1322, such as an optional, further fluid inlet 260' shown in Fig. 2. A fluid inlet 260 enables the cooling fluid flow 280 to enter the inner volume 1120, to contact the components of the electrical machine 100 for extracting heat.

The cooling system 250 further may comprise one or more fluid outlets 270, such as a first fluid outlet 270.1 and a second fluid outlet 270.2 shown here. The cooling system 250 may comprise conduits for guiding the cooling fluid flow 280, which are not shown here for the sake of clarity.

The electrical propulsion unit 300 further comprises a power converter 350, which is electrically connected to the electrical machine 100, in particular here to the stator module 180. The power converter 350 is configured to supply AC current to the electrical machine 100 when operated in a motor mode, and/or optionally receive AC current from the electrical machine 100 when operated in a generator mode. The power converter 350 is connected to an energy supply 370 via a supply cable 360. The supply cable 360 may comprise a first supply conductor 360.1 and the second supply conductor 360.2, as shown here. Optionally, as indicated here, the power converter 350 and/or the supply cable 360 may be arranged such that it or they are exposed to the cooling fluid flow 280, or - as shown here - to a secondary cooling fluid flow 282 branched off from the cooling fluid flow 280, e. g. by means of a manifold or the like flow guiding means (not shown here).

Fig. 3 shows the electrical propulsion unit 300A of Fig. 1 and Fig. 2 from a top view. As can be seen, the rotor boom 1180 extends along the boom axis AB with a substantially constant cross-section, wherein the cross section widens at the end of the rotor boom 1180 in order to accommodate the electrical propulsion unit 300, in particular the electrical machine 100.

The rotor boom 1180 may, in addition to its structural wall 1100, comprise a support structure 1200, in particular to reinforce the rotor boom 1180. This may be advantageous as high forces act on the rotor boom 1180 during operation. A beam belt 1210 may be fixed to the structural wall 1100, and may be arranged in the inner volume 1120 and may extend, e.g., along the boom axis. By arranging the bearing units near, or on the support structure 1200, in particular the beam belt 1210, the mechanical properties of the electrical machine 100 may be improved. In particular the stiffness may be improved, resulting in reduced misalignment of the rotor shaft 120 and/or reduced bearing tolerances of the bearing units 140, 160.

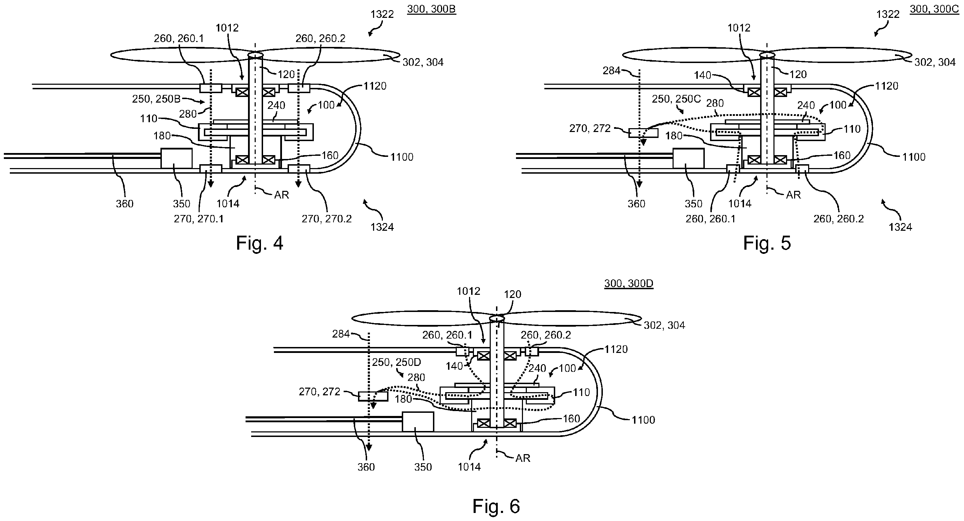

Fig. 4 shows a further embodiment 300B of an electrical propulsion unit 300 with a further cooling system 250B. The embodiment shown differs from the previous embodiment in that the cooling system comprises two fluid inlets 260, namely a first fluid inlet 260.1 and a second fluid inlet 260.2, that are arranged on the side of the structural wall 1100 facing the propulsor 302, i. e. a propulsor facing side 1322. The cooling system 250B further comprises two fluid outlets 270, namely a first fluid outlet 270.1 and a second fluid outlet 270.2, arranged on an opposing side 1324 of the structural wall 1100, averted from the propulsor 302.

In particular, the fluid inlets 260.1, 260.2 are arranged in proximity of the first wall region 1012 of the structural wall 1100, in particular above the electrical machine 100, and the fluid outlets 270.1, 270.2 are arranged in proximity of the second wall region 1014 of the structural wall 1100, in particular below the electrical machine 100. With such arrangement, a substantially straight cooling fluid flow 280, in particular substantially parallel to the rotational axis AR, can be achieved. As the fluid inlets 260.1, 260.2 and/or the fluid outlets 270.1, 270.2 are arranged within the area of the electrical machine 100, a deflection of the cooling fluid flow 280 can be reduced or minimized.

Fig. 5 shows another embodiment 300C of an electrical propulsion unit 300 according to the concept of the invention. The electrical propulsion unit 300 C differs from the previous electrical propulsion units 300A, 300B in that it comprises another cooling system 250C. The cooling system 250C comprises a suction outlet 272, configured to propel the cooling fluid flow 280. In particular, the suction outlet 272 is arranged at a position with a relatively high under pressure and/or at a position subjected to an ambient airflow 284. The ambient airflow 284 may be adapted to drag the cooling airflow 280, thus accelerating the cooling airflow 280 upon exiting at the suction outlet 272. Thus, in the embodiment shown, the basic principle for propelling the cooling fluid flow 280 is mainly based on suction (e. g. a relative negative pressure) rather than compression. The cooling system 250C further comprises a first fluid inlet 260.1 and a second fluid inlet 260.2, arranged on propulsor the averted side 1324 of the vehicle frame structure 1000.

Fig. 6 shows yet another embodiment 300D of an electrical propulsion unit 300. The electrical propulsion unit 300D comprises yet another cooling system 250D. The cooling system 250D comprises, similar to the previous cooling system 250C, a suction outlet 272. As a difference to the cooling system 250C shown in Fig. 5 however, the fluid inlets 260.1, 260.2 are arranged on a propulsor facing side 1322 of the vehicle frame structure 1000. Via such arrangement, the suction based propelling principle of the cooling fluid flow 280 can advantageously be combined with a pressure based propelling principle, as the fluid inlets 260.1, 260.2 are arranged in proximity of the propulsor 302 and thus of the airflow propelled by it.

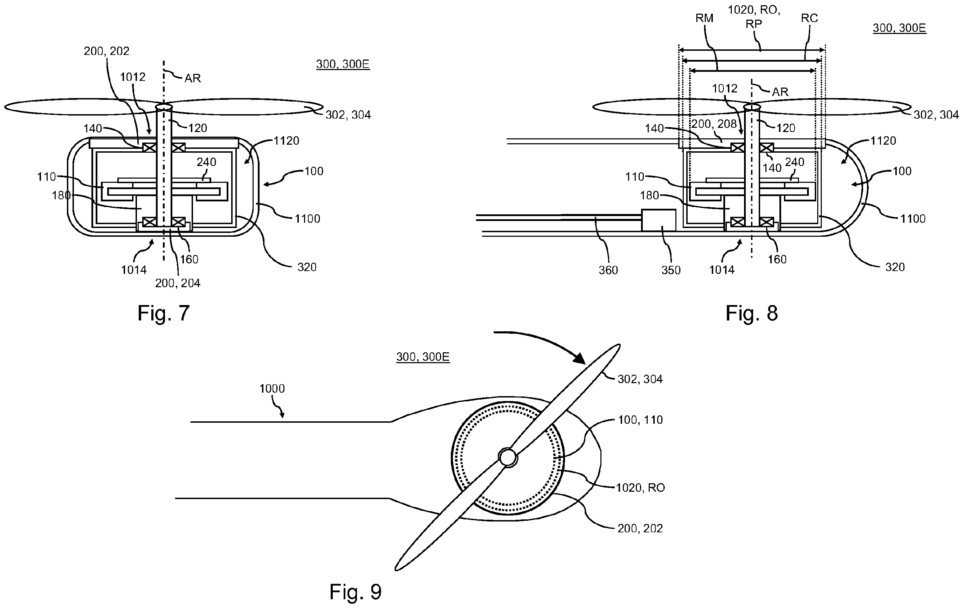

Fig. 7, Fig. 8, Fig. 9 show yet another embodiment 300E of an electrical propulsion unit 300. As a difference to the previously shown embodiments, the electrical propulsion unit 300 comprises a cartridge 320. The cartridge 320 is configured to accommodate the main components of the electrical machine 100E, in particular the rotor 110, the stator module 180, as well as the first and second bearing unit 140, 160. By means of a cartridge 320, the repair and/or replacement of an electrical machine 100E can be facilitated, as the relevant components of said electrical machine 100E are contained within the cartridge 320. In other words, the cartridge 320 can be considered a replaceable module of an electrical machine 100. The cartridge 320 comprises and/or is attachable to adapter plates 200, such as here a first adapter plate 102 and a second adapter plate 204. The adapter plates 200, 202, 204 constitute the mechanical interfaces of the electrical machine 100 to the vehicle frame structure 1000, in particular the structural wall 1100. According to the concept of the invention, the electrical propulsion unit 300E gains structural support from the attachment to the structural wall 1100 via the adapter plates 200.

Turning to Fig. 8, the electrical propulsion unit 300 the comprises an opening adapter plate 208, which is configured to fit into a wall opening 1020 of the structural wall 1100. By means of such opening adapter plate 208, the cartridge 320 can be inserted into, and ejected from, the vehicle frame structure 1000, in particular as a whole. The opening adapter plate 208 has a circular shape with a plate diameter RP that corresponds to an opening diameter RO of the wall opening 1020. In particular, the opening diameter RO is equal to or larger than an outer cartridge diameter RC of the cartridge 320, to allow the cartridge 322 pass the wall opening 1020.

The plate diameter RP may differ from the opening diameter RO, in particular may be larger, in order to form a shoulder 210 of the adapter plate 200, in particular of the opening adapter plate 208.

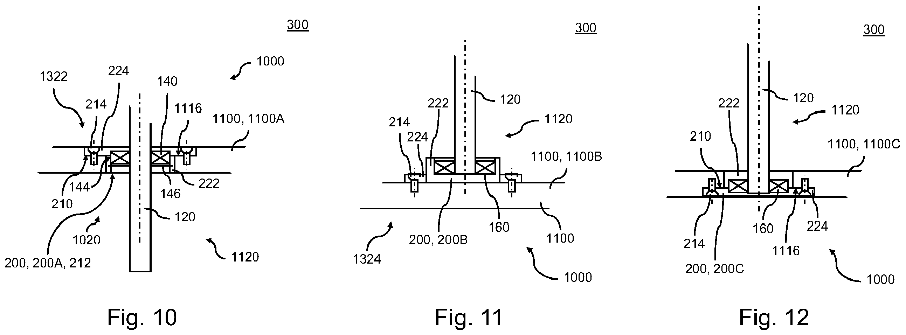

Fig. 10, Fig. 11, Fig. 12 show embodiments with different ways of fixing a bearing unit 140, 160 to a structural wall 1100, within the scope of this disclosure. The embodiments and in particular adapter plates 200 shown in Figs. 10-12, or variations or combinations thereof, may be applied to any embodiment of electrical machines 100 shown in this disclosure.

Fig. 10 shows a first adapter plate 200A configured as a flange adapter plate 212. The flange adapter plate 112 comprises a main portion 222 and a flange portion 224 extending radially, so as to form a shoulder 210. The bearing unit 140 is arranged in a bearing seat 144, and is axially fixed via a retaining ring 146.

The wall opening 1020 is configured such that a wall shoulder 1116 is formed. The wall shoulder 1116 protrudes radially inward and forms a surface to mate with the shoulder 210 of the adapter plate 200. The adapter plate can be fixed with a plurality of bolts 214, two of which are exemplarily shown here. Via a flange-like connection of adapter plate 200 and structural wall 1100, a stable, yet compact mechanical connection can be achieved. In particular, the adapter plate is fixed flush within the structural wall 1100, allowing for improved outer fluid dynamic properties of the vehicle frame structure 1000. In the embodiment shown, a rotor shaft 120 of an electrical machine reaches from an inner volume 1120 of the vehicle frame structure 1000 through the structural wall 1100 to the outside of the vehicle frame structure 1000 and connects to a propulsor (not shown here). Such arrangement is particularly suitable when the adapter plate 200 and/or the bearing unit 140 is arranged on a propulsor facing side 1322 of the vehicle frame structure 1000.

Fig. 11 shows another adapter plate 200B. As a difference to the previously shown embodiment of Fig. 10, the adapter plate 200B does not feature through hole for accommodating the rotor shaft 120. In contrast, the rotor shaft 120 terminates at the bearing unit 160. As a further difference, the adapter plate 200 is mounted on top of the structural wall 1100 (not mounted flush within the structural wall 1100) by means of bolts 214. Such mounting allows for a relatively simple design, e. g. since no tolerances or shoulders have to be fitted together. Such mounting as shown in Fig. 11 is particularly suitable for an arrangement in the inner volume 1120 of the vehicle frame structure 1000, where aerodynamic considerations are of reduced relevance or negligible. Such arrangement is particularly suitable when the adapter plate 200 and/or the bearing unit 160 is arranged on a propulsor averted side 1324 of the vehicle frame structure 1000.

Fig. 12 shows yet another adapter plate 200C, that may particularly be arranged on a propulsor averted side 3024 of the structural wall 1100. Similarly to the adapter plate shown in Fig. 10, the adapter plate 200C comprises a flange portion 224, and the adapter plate 200 sits flush in the structural wall 1100. As a difference to Fig. 10, the rotor shaft 120 terminates at the adapter plate 200C and thus the adapter plate 200C provides an axial stop for the rotor shaft 120. The shown arrangement is particularly suitable for mounting a second bearing unit 160 on a propulsor averted side 1024 that is easily accessible and replaceable.

Also, combinations of the features of different shown adapter plates, as well as variations, in particular regarding flange type, through hole and/or flush arrangement, may be realized in the scope of this disclosure.

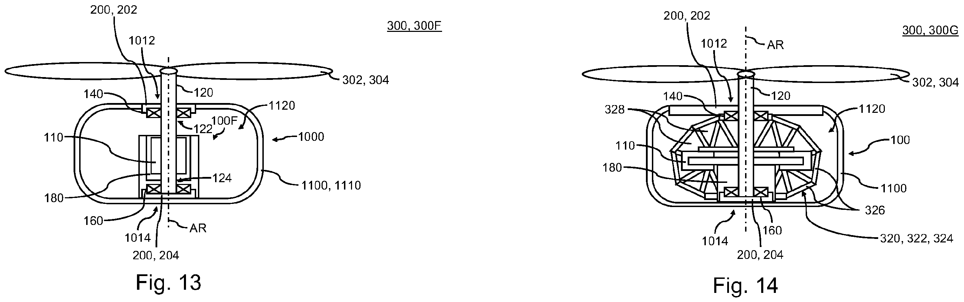

Fig. 13 shows another embodiment of an electrical propulsion unit 300F. As a difference to the previously shown embodiments, it comprises an electrical machine 100F which is configured as a radial flux machine with an in-runner rotor 110F. It should be obvious to the person skilled in the art, that an electrical machine 100 and/or an electrical propulsion unit 300 according to the present disclosure may be of any other type, in particular including electrical machines with axial flux, radial flux and/or transfers the flux as well as radial and/or axial air gaps.

Fig. 14 shows another embodiment of an electrical propulsion unit 300G. As a difference to the electrical propulsion unit 300E shown in Figs. 7-9, the cartridge 320 of the electrical machine 100G is a framework cartridge 322. The framework cartridge 322 comprises a plurality of longitudinal body elements that are joined together, forming a plurality of cartridge orifices 328 formed therebetween, two of which are indicated exemplarily in Fig. 14. In the present embodiment, the framework cartridge 322 comprises a tubular structure 324. The tubular structure 324 comprises a plurality of tubes 326, two of which are exemplarily indicated in Fig. 14. By means of a framework cartridge 322, weight may be saved while achieving a required degree of stiffness, in particular in an axial direction. Further, the cooling of the electrical machine 100 may be facilitated bv means of a framework cartridge 322, as a cooling fluid flow may pass from elsewhere in the inner volume 1120 to the electrical machine 100.

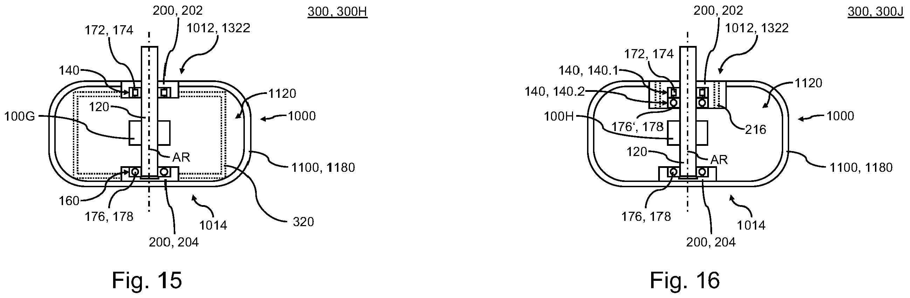

Fig. 15 exemplarily illustrates possible bearing units 140, 160 applicable in an electrical machine 100H of a further electrical propulsion unit 300H according to the present disclosure. A first bearing unit 140 comprises a floating bearing 172, here in the form of a roller bearing 174 with a plurality of cylindrical roller elements. Such floating bearing 172 allows for an axial tolerance, in particular of an axial extension of the rotor shaft 120, e. g. due to thermal expansion during operation. The floating bearing 172 comprises an outer bearing shell fixed to the first adapter plate 202.

The electrical machine 100H comprises a second bearing unit 160, which again comprises a fixed bearing 176 in the form of a ball bearing 178. The ball bearing 178 comprises a plurality of spherical roller elements, which are adapted to be rotatably engaged with an inner and outer bearing shell, thus enabling a rotational movement around the rotational axis AR, whilst providing an axial fixation of the rotor shaft 120. The outer bearing shell of the fixed bearing 176 is fixed to the second adapter plate 204.

The electrical machine 100H may optionally comprise a cartridge 320, which is fixed to the first and second adapter plate 202, 204. With such cartridge 320, a further alignment, in particular axial alignment, of the first and second bearing unit 140, 160 may be achieved. For that purpose, the cartridge 320 may have an axial stiffness (i. e. a stiffness in a direction of the rotational axis AR) that is significantly higher than the stiffness of the vehicle frame 1000 in a direction of the rotational axis AR.

Fig. 16 illustrates yet another embodiment of an electrical machine 100J. As a difference to the previously shown electrical machine 100H, the electrical machine 100J comprises a first bearing unit 140 with a further fixed bearing 176', here in the form of a further ball bearing 178'. Hence, the first bearing unit 140 comprises a first part 140.1 with a floating bearing 172 in the form of a roller bearing 174, and a second part 140.2 with a further fixed bearing 176' the form of the further ball bearing 178'. Optionally, the adapter plate 200 holding the further fixed bearing 176' may comprise an elastic element 216, such as an annular plastic insert, and/or a plurality of circumferentially arranged orifices. By means of such elastic element 216, a flexibility of the adapter plate 200 in the axial direction can be increased, and axial loads, e. g. due to thermal growth during operation of the electrical machine, may be reduced.

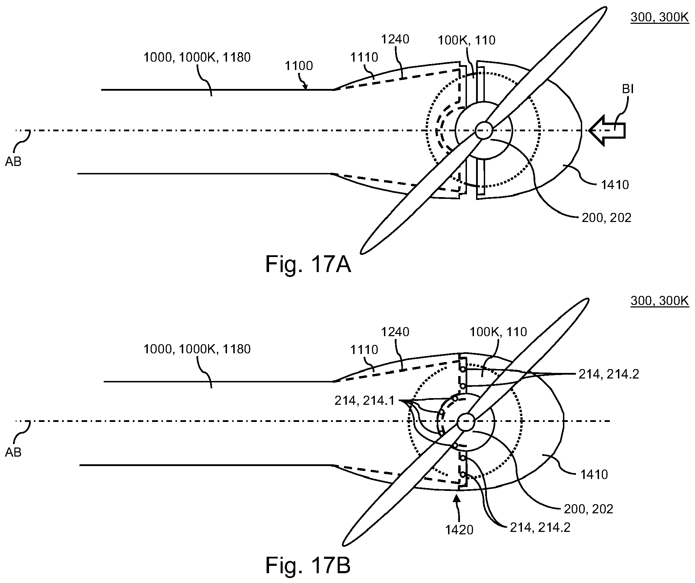

Fig. 17A and Fig. 17B illustrate another embodiment of an electrical machine 100K, and an according vehicle frame structure 1000K in the form of a rotor boom 1180. The vehicle frame structure 1000K comprises a fork structure 1240, which is adapted to receive the electrical machine 100K, and fix said electrical machine 100K thereto in a releasable manner. Electrical machine 100K comprises a machine fairing 1410. The rotor boom 1180 comprises a boom fairing 1110, surrounding at least partially the rotor boom 1180 and/or the fork structure 1240. The boom fairing 1110 and the machine fairing 1410 are shaped according to each other, in particular such that when the electrical machine 100K is mounted to the fork structure 1240, a smooth, in particular continuous, surface will result in an interface region 1420. In other embodiments, the rotor boom 1180 and/or the fork structure 1240 may be shaped such that no additional fairing is required, and where in particular the structural wall is the outermost part or surface of the rotor boom 1180. The fork structure 1240 can be considered the continuation of the structural wall 1100 of the rotor boom 1180, wherein the boom fairing 1110 covers the fork structure 1240, improving the fluid dynamic properties of the rotor boom 1180 in the area of the fork structure 1240.

As can be seen from Fig. 17A, a mounting of the electrical machine 100K includes an insertion movement BI, which is substantially parallel to a boom axis AB. Subsequently, as shown in figure 17B, the electrical machine 100K can be fixed to the fork structure 1240, e. g. by means of bolts 214. The first group 214.1 of bolts 214 fixes the adapter plates 202, 204 to the fork structure 1240. Optionally, as shown here, a second group 214.2 of bolts 214 attach the machine fairing 1410 to the fork structure 1240 and/or the boom fairing 1110.

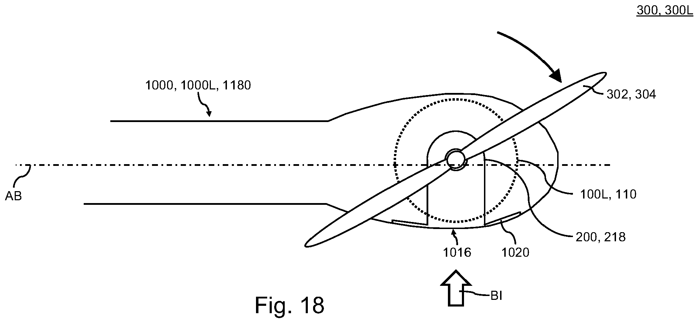

Fig. 18 shows yet another embodiment of an electrical machine 100L of an electrical propulsion unit 300L. A vehicle frame structure 1000L in the form of a rotor boom 1180 comprises a lateral wall opening 1022, which is a wall opening 1020 that extends at least partially over a lateral wall region 1016. Accordingly, the electrical machine 100L comprises a lateral adapter plate 218, which extends from the region of the bearing units 140, 160 to a radial outer region of the electrical machine 100L, to cover the lateral wall opening 1022. In particular, as shown here, the lateral adapter plate 218 extends from the first bearing unit 140 via the lateral wall region 1016 to the second bearing unit 160, forming one integral piece. The lateral adapter plate 218 may be attachable to the structural wall 1100, and/or two a corresponding fork structure allowing for an insertion movement BI, which here is substantially perpendicular to a boom axis BA.

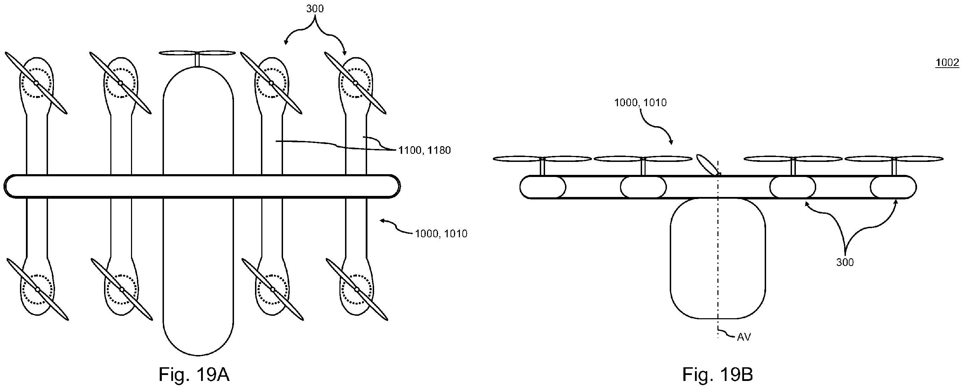

Fig. 19A and Fig. 19B show, in a simplified illustration, a vehicle frame structure 1000 in the form of an airframe 1010 for an aircraft 1002. The aircraft comprises a plurality of eight electrical propulsion units 300, two of which are referenced here. Each electrical propulsion unit 300 is mounted on a rotor boom 1180, and is adapted to provide propulsion, in particular lift, to said aircraft 1002. The aircraft 1002 is an electrical vertical takeoff and landing aircraft (eVTOL). However, the teachings of the present disclosure may be applied to other types of aircraft, such as electrical conventional takeoff and landing aircrafts (eCTOL), and also or other kind of vehicles, such as land and sea vehicles.

### List of reference signs (part of the description)

- 100: Electrical machine
- 100A-L: First to eleventh embodiment of an electrical machine
- 110: Rotor of the electrical machine
- 120: Rotor shaft
- 122: First region of the rotor shaft
- 124: Second region of the rotor shaft
- 140: First bearing unit
- 144: Bearing seat
- 146: Retaining ring

- 160: Second bearing unit
- 172: Floating bearing
- 174: Roller bearing
- 176: Fixed bearing
- 176': Further fixed bearing
- 178: Ball bearing
- 178': Further ball bearing
- 180: Stator module
- 200: Adapter plate
- 202: First adapter plate
- 204: Second adapter plate
- 208: Opening adapter plate
- 210: Shoulder of the adapter plate
- 212: Flange adapter plate
- 214: Bolt
- 216: Elastic element
- 218: Lateral adapter plate
- 222: Main portion of the adapter plate
- 224: Flange portion of the adapter plate
- 240: Flexible coupling
- 242: Orifice
- 250: Cooling system
- 250A-D: First to fourth embodiment of a cooling system
- 252: Cooling fluid conduit
- 260: Fluid inlet
- 260': Further fluid inlet
- 260.1, 260.2: First, second fluid inlet
- 262: Particle separator
- 264: Filter
- 270: Fluid outlet
- 270.1, 270.2: First, second fluid outlet
- 272: Suction outlet
- 280: Cooling fluid flow
- 282: Secondary cooling fluid flow
- 300: Electrical propulsion unit
- 300A-L: First to eleventh embodiment of an electrical propulsion unit
- 302: Propulsor
- 304: Propeller
- 320: Cartridge
- 322: Framework cartridge
- 324: Tubular structure
- 326: Tube
- 328: Cartridge orifice
- 350: Power converter
- 360: Supply cable
- 360.1: First supply conductor
- 360.2: Second supply conductor
- 370: Energy supply
- 1000: Vehicle frame structure
- 1002: Aircraft
- 1010: Airframe
- 1012: First wall region
- 1014: Second wall region
- 1016: Third wall region, lateral wall region
- 1020: Wall opening
- 1100: Structural wall
- 1108: Fairing
- 1110: Boom fairing
- 1116: Wall shoulder of the structural wall
- 1120: Inner volume enclosed by structural wall
- 1140: Wall surface layer
- 1142: Containment layer
- 1144: Noise shield layer
- 1146: EMI shield layer
- 1180: Rotor boom
- 1210: Beam belt
- 1240: Fork structure
- 1322: Propulsor facing side of the structural wall
- 1324: Propulsor averted side of the structural wall
- 1410: Machine fairing
- 1420: Interface region

- AB: Boom axis
- AR: Rotational axis of the rotor of the electrical machine
- AV: Vertical axis of the vehicle, aircraft
- BI: Insertion movement
- RC: Cartridge diameter
- RM: Outer machine diameter of the electrical machine
- RO: Opening diameter of the wall opening
- RP: Plate diameter

## Claims

1. Electrical machine (100) for integration into a vehicle frame structure (1000), wherein the vehicle frame structure (1000) comprises a structural wall (1100) which at least partially encloses an inner volume (1120), the electrical machine (100) comprising:
- a rotor (110) with a rotor shaft (120), wherein the rotor shaft (120) is rotatable around a rotational axis (AR), and connectable to a propulsor (302), in particular a propeller (304), for transferring torque to or from a fluid,
- a first bearing unit (140) configured to hold the rotor shaft (100) in a rotatable manner,
- a second bearing unit (160) configured to hold the rotor shaft (100) in a rotatable manner,
**characterized in that**
- the first bearing unit (140) is releasably attachable to a first wall region (1012) of the structural wall (1100), and the second bearing unit (160) is releasably attachable to a second wall region (1014) of the structural wall (1100), wherein
- the first wall region (1012) and the second wall region (1014) are spaced apart with respect to the rotational axis (AR).

2. Electrical machine (100) according to claim 1, **characterized in that**
the rotor (110) is connected in a torque transferring manner to the rotor shaft (120) via a flexible coupling (240).

3. Electrical machine (100) according to claim 1 or 2, **characterized by**
a cooling system (250) for guiding a cooling fluid flow (280), wherein the cooling system (250) comprises at least one fluid inlet (260) and at least one fluid outlet (270, 270.1, 270.2), and
the at least one fluid inlet (260) and the at least one fluid outlet (270, 270.1, 270.2) are arranged in or on the structural wall (1100).

4. Electrical machine (100) according to claim 3, **characterized in that**
the at least one fluid outlet (270, 270.1, 270.2) is a suction outlet (272), configured to propel the cooling fluid flow (280), in particular by means of an ambient fluid flow (284) flowing relative to the electrical machine (100) and/or the vehicle frame structure (1000).

5. Electrical machine (100) according to any of the preceding claims, **characterized in that**
at least one of the first bearing unit (140) and the second bearing unit (160) is releasably attachable to the structural wall (1100) by means of an adapter plate (200, 202, 204), and the at least one bearing unit (140, 160) is fixed to the adapter plate (200, 202, 204).

6. Electrical machine (100) according to claim 5, **characterized in that**
the adapter plate (200, 202, 204) is configured to cover a, in particular circular, wall opening (1020) with an opening radius (RO), wherein the opening radius (RO) is larger than an outer machine radius (RM) of the electrical machine (100).

7. Electrical machine (100) according to claim 5 or 6, **characterized in that** the adapter plate (200, 202, 204) comprises a shoulder (210), configured to fit to a wall shoulder (1116) of the structural wall (1100).

8. Electrical machine (100) according to any of the preceding claims, **characterized by**
a stator module (180), wherein the stator module (180) is attachable to the structural wall (1100) or to the adapter plate (200, 202, 204).

9. Electrical machine (100) according to any of the preceding claims, **characterized by** a cartridge (320), wherein
the cartridge (320) contains the rotor (110) and/or the stator module (180) and/or at least one of the first and second bearing units (140, 160), and wherein
the cartridge (320) is attachable to the structural wall (1100) and/or to the adapter plate (200, 202, 204).

10. Electrical machine (100) according claim 9, **characterized in that** the cartridge (320) comprises a plurality of cartridge orifices (328) and/or is a framework cartridge (322).

11. Electrical machine (100) according to any of the preceding claims, **characterized by** a machine fairing (1410), wherein
the machine fairing (1410) at least partially surrounds the electrical machine (100) and/or the cartridge (320).

12. Electrical propulsion unit (300) comprising an electrical machine (100) according to any of the preceding claims.

13. Electrical propulsion unit (300) according to claim 12, **characterized by**
a power converter (350), wherein the power converter (350) is electrically connected to an energy supply (370) via at least one supply cable (360) and/or wherein the power converter (350) is mounted to the structural wall (1100).

14. Vehicle frame structure (1000), in particular airframe (1010) for an aircraft (1002), comprising an electrical propulsion unit (300) according to claim 12 or 13, and/or an electrical machine (100) according to any of claims 1 to 11.

15. Vehicle frame structure (1000) according to claim 14, **characterized in that**
the vehicle frame structure (1000) is or comprises a rotor boom (1180).

16. Vehicle frame structure (1000) according to claim 14 or 15, **characterized in that**
the structural wall (1100) comprises at least one wall opening (1020), configured to accommodate an adapter plate (200) and/or a cartridge (320).

17. Vehicle frame structure (1000) according to one of claims 14 to 16, **characterized by**
a fork structure (1240), configured to receive the electrical machine (100), in particular at least one of the adapter plates (200, 202, 204).

18. Vehicle (1000), in particular aircraft (1002), comprising a vehicle frame structure (1000) according to one of claims 14 to 17.
